(19) Europäisches Patentamt
European Patent Office
Office européen des brevets

(11) Veröffentlichungsnummer: **0 209 028 A2**

(12) # EUROPÄISCHE PATENTANMELDUNG

(21) Anmeldenummer: **86109206.2**

(22) Anmeldetag: **05.07.86**

(51) Int. Cl.⁴: **C09B 57/04**, C09D 7/00, C09B 67/22, C07D 209/44

(30) Priorität: **19.07.85 DE 3525751**

(43) Veröffentlichungstag der Anmeldung: **21.01.87 Patentblatt 87/04**

(84) Benannte Vertragsstaaten: **CH DE GB LI**

(71) Anmelder: **BASF Aktiengesellschaft**
**Carl-Bosch-Strasse 38**
**D-6700 Ludwigshafen(DE)**

(72) Erfinder: **Lotsch, Wolfgang, Dr.**
**Stettiner Strasse 32**
**D-6711 Beindersheim(DE)**

(54) **Verwendung von 3-Iminoisoindolinverbindungen und neue 3-Aminoisoindolinverbindungen.**

(57) Verwendung von 3-Iminoisoindolinen der Formel (I)

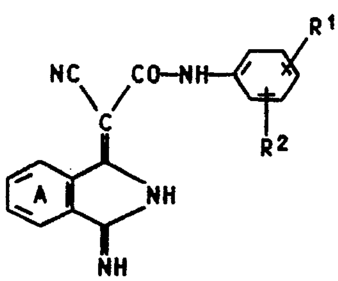

(I),

in der R' für H, Halogen, Alkyl, Alkoxy, Carboalkoxy, Trifluormethyl oder Nitro und R² für H, Halogen, Alkyl, Alkoxy oder Carbalkoxy stehen und der Ring A gegebenenfalls durch Halogen, Alkyl, Alkoxy, Carboalkoxy, Trifluormethyl oder Nitro substituiert ist als Pigmente.

Die Verbindungen (I) liefern in Lacken farbstarke Gelbfärbungen in reinen Farbtönen und guten Lichtechtheiten.

Außerdem neue 3-Iminoisoindoline der Formel (III)

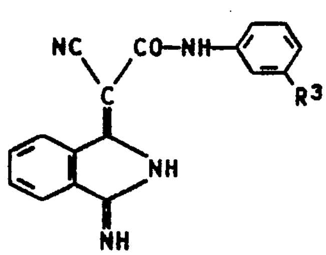

(III),

in der R³ für Chlor oder Carbomethoxy bedeutet.

EP 0 209 028 A2

Xerox Copy Centre

# Verwendung von 3-Iminoisoindolinverbindungen und neue 3-Aminoisoindolinverbindungen

1-[Cyan-carbamoylmethylen]-3-iminoisoindoline sind in großer Zahl als Vorstufen von Isoindolinpigmenten bekannt. Aus der DE-OS 26 42 878 sind an der Carbamoylgruppe durch einen heteroaromatischen Rest substituierte Derivate als Pigmentfarbstoffe beschrieben. Diese Pigmente geben neutrale bis rotstichig gelbe Färbungen, die weder in der Farbstärke noch in der Farbtonreinheit höchsten Anforderungen genügen. Weiterhin ist die Herstellung von Cyanacetamiden, die am Stickstoff der Carbamoylgruppe einen Heterocyclus oder einen mit einem Benzring kondensierten Heterocyclus tragen, sehr aufwendig.

Aufgabe der Erfindung war, Pigmentformen von gut zugänglichem 1-[Cyan-carbamoylmethylen]-3-iminoisoindolinen bereitzustellen, welche die Schwächen der genannten Pigmente nicht aufweisen.

Es wurde gefunden, daß 1-[Cyan-carbamoylmethylen]-3-iminoisoindoline der Formel (I)

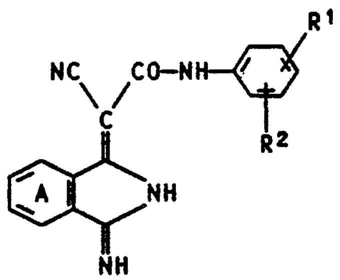

(I),

in der $R^1$ für Wasserstoff, Halogen, $C_1$-bis $C_4$-Alkyl, $C_1$-bis $C_4$-Alkoxy, Carbo-$C_1$-bis $C_4$-alkoxy, Trifluormethyl oder Nitro und $R^2$ für Wasserstoff, Halogen, $C_1$-bis $C_4$-Alkyl, $C_1$-bis $C_4$-Alkoxy oder Carbo-$C_1$-bis $C_4$-alkoxy stehen und der Ring A gegebenenfalls durch Halogen $C_1$-bis $C_4$-Alkyl, $C_1$-bis $C_4$-Alkoxy, Trifluormethyl oder Nitro substituiert ist, als Pigmente verwendet werden können. Die erfindungsgemäß zu verwendenden Isoindolinverbindungen - (I) liefern in Lacken farbstarke Gelbfärbungen in reinen Farbtönen und guter bis sehr guter Lichtechtheit. Gegenüber dem aus der DE-OS 26 42 878, Beispiel 15, bekannten 3-Iminoisoindolinpigment zeichnen sich die erfindungsgemäß zu verwendenden Pigmente durch reinere Farbtöne und eine überlegene Lichtechtheit aus.

Bevorzugt sind die Farbstoffe (I), in der der Ring A unsubstituiert ist. Weiterhin sind Farbstoffe (I) bevorzugt, bei denen $R^1$ für Wasserstoff, Halogen, Methyl, Methoxy, Trifluormethyl oder Carbomethoxy und $R^2$ für Wasserstoff, Halogen, Methyl, Methoxy oder Carbomethoxy stehen, wobei $R^1$ und $R^2$ gleich oder verschieden sind und $R^1$ und/oder $R^2$ in 3-und/oder 4-Stellung stehen und der Ring A unsubstituiert ist.

Besonders hervorzuheben sind die Farbstoffe - (I), in denen der Ring A unsubstituiert ist und $R^1$ für 3-Chlor, 3-Fluor, 3-Trifluormethyl oder 3-Carbomethoxy und $R^2$ für Wasserstoff stehen.

Ganz besonders bevorzugt sind als Pigmente die Verbindungen der Formel (I) in der $R^2$ für Wasserstoff und $R^1$ für 3-Chlor oder 3-Carbomethoxy stehen. Diese Verbindungen sind neu.

Die Erfindung betrifft außerdem neue 3-Iminoisoindolinverbindungen der Formel (II)

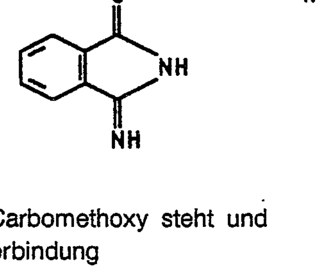

(II),

in der $R^3$ für Chlor oder Carbomethoxy steht und deren Gemische mit der Verbindung

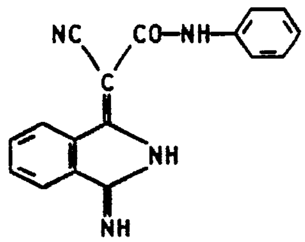

(III).

Die Herstellung der Verbindungen der Formel (I) erfolgt nach bekannten Verfahren durch Kondensation eines Diiminoisoindolins der Formel (IV)

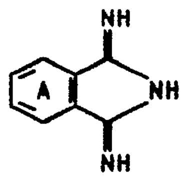

(IV),

unter Abspaltung von Ammoniak mit einem Cyanacetanilid der Formel (V)

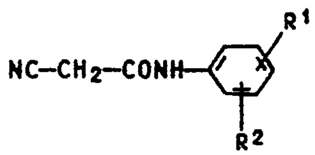

(V),

in der R', R² und A die oben angegebene Bedeutung haben. Als Kondensationsmedium kommen Wasser oder niedere Alkohole, z.B. Methanol, Ethanol und die Propanole in Betracht. Die Umsetzung erfolgt bei Temperaturen zwischen 40°C und 100°.C.

Die Verbindungen (I) fallen bei der Synthese in einer für die Anwendung verwendbaren Form an. Vorteilhafterweise werden die Syntheseprodukte jedoch nach bekannten Formierungsverfahren in ihren Pigmenteigenschaften verbessert.

Die nachstehenden Beispiele sollen die Erfindung näher erläutern. Die angegebenen Teile beziehen sich auf das Gewicht.

Beispiel 1

a) 19,5 Teile m-Chlor-cyanacetanilid werden zusammen mit 21 Teilen des Monoadduktes von Ethylenglykol an Diiminoisoindolin in 150 Teilen Methanol fünf Stunden bei Siedetemperatur gerührt. Nach dem Abkühlen wird filtriert, das Filtergut mit Methanol gewaschen und getrocknet. Man erhält 30 Teile des Pigmentes der Formel - (IIa)

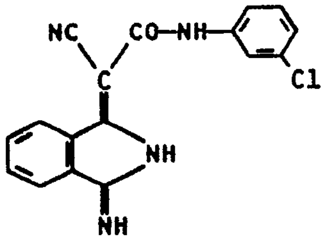

(II a),

das nach dem Einarbeiten im Lack neutralgelbe Färbungen mit guter Lichtechtheit liefert.

b) 50 Teile des Pigmentes aus a) werden in einer Planetenkugelmühle (gefüllt mit 20 Achatkugeln Ø 1 cm und 20 Achatkugeln Ø 2 cm) 4 Stunden gemahlen.

c) Das lockere zitronengelbe Pulver, das aus Agglomeraten, die aus Primärteilchen con < 0,1 µm zusammengesetzt sind, besteht, wird in 400 Teilen Benzoesäuremethylester 6 Stunden bei 60°C gerührt. Nach dem Abkühlen auf 50°C wird filtriert, das Filtergut mit Methanol esterfrei gewaschen und getrocknet. Man erhält 45 Teile einer Pigmentform, die nach dem Einarbeiten in Lack farbstarke und brillante grünstichig gelbe Färbungen mit hervorragender Licht-und Wetterechtheit gibt.

Beispiele 2 bis 13

Man verfährt wie in Beispiel 1 a), 1 b) und 1 c), verwendet jedoch anstelle von m-Chlor-cyanacetanilid und Diiminoisoindolin die in der Tabelle angegebenen Cyanacetanilide

$NH\text{-}CH_2\text{-}CONH\text{-}R^4$ (V a)

und Diiminoisoindoline (IV) und erhält Gelbpigmente mit vergleichbaren coloristischen und anwendungstechnischen Eigenschaften.

| Bsp. | (IV) | (V a) $R^4$ | Farbton |
|---|---|---|---|
| 2 | 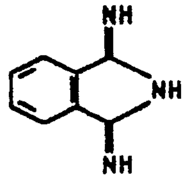 | 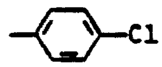 | neutralgelb |
| 3 | 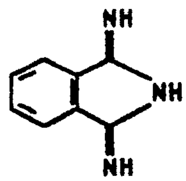 | 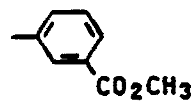 | grünstichig gelb |
| 4 | 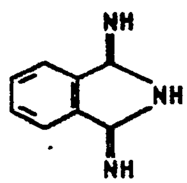 | 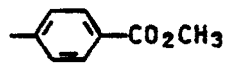 | grünstichig gelb |
| 5 | 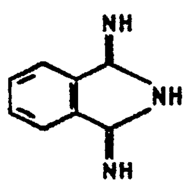 | 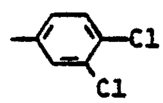 | neutralgelb |
| 6 | 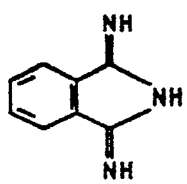 | 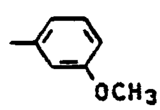 | neutralgelb |
| 7 | 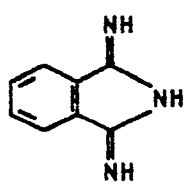 | 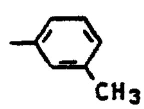 | neutralgelb |

| Bsp. | (IV) | (V a) $R^4$ | Farbton |
|---|---|---|---|
| 8 | 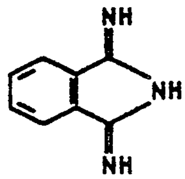 | 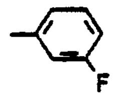 | grünstichig gelb |
| 9 | 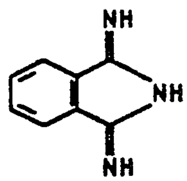 | 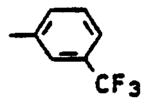 | grünstichig gelb |
| 10 | 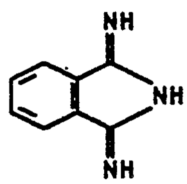 | 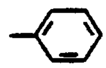 | neutralgelb |
| 11 | 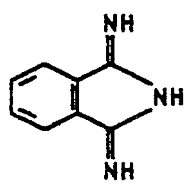 | 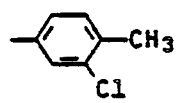 | neutralgelb |
| 12 | 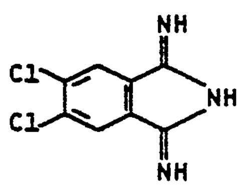 | 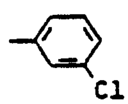 | neutralgelb |
| 13 | 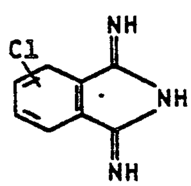 | 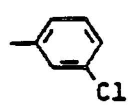 | neutralgelb |

Beispiel 14

Man verfährt wie in Beispiel 1 b) und 1 c), verwendet jedoch statt der Verbindung der Formel (II a) aus Beispiel 1 a) ein 1:1-Gemisch, bestehend aus der Verbindung der Formel (II a) aus Beispiel 1 a) und dem 1-[Cyan-phenylcarbamoylmethylen]-3-iminoisoindolin (Beispiel 10). Man erhält ein Gelbpigment, das praktisch die gleichen Eigenschaften wie das nach Beispiel 1 c) erhaltene aufweist.

## Ansprüche

1. Verwendung von 3-Iminoisoindolinverbindungen der Formel

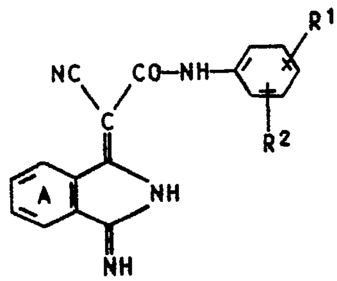

in der $R^1$ für Wasserstoff, Halogen, $C_1$-bis $C_4$-Alkyl, $C_1$-bis $C_4$-Alkoxy, Carbo-$C_1$-bis $C_4$-alkoxy, Trifluormethyl oder Nitro und $R^2$ für Wasserstoff, Halogen, $C_1$-bis $C_4$-Alkyl, $C_1$-bis $C_4$-Alkoxy oder Carbo-$C_1$-bis $C_4$-alkoxy stehen und der Ring A gegebenenfalls durch Halogen $C_1$-bis $C_4$-Alkyl, $C_1$-bis $C_4$-Alkoxy, Trifluormethyl oder Nitro substituiert ist, als Pigmente.

2. Verwendung gemäß Anspruch 1, dadurch gekennzeichnet, daß in der Formel der Ring A unsubstituiert ist.

3. Verwendung gemäß Anspruch 1 oder 2, dadurch gekennzeichnet, daß in der Formel $R^1$ für Wasserstoff, Halogen, Methyl, Methoxy, Trifluormethyl oder Carbomethoxy und $R^2$ für Wasserstoff, Halogen, Methyl, Methoxy oder Carbomethoxy stehen, wobei $R^1$ und $R^2$ gleich oder verschieden sind und $R^1$ und/oder $R^2$ in 3-und/oder 4-Stellung stehen.

4. Verwendung gemäß Anspruch 2, dadurch gekennzeichnet, daß in der Formel $R^1$ für 3-Chlor, 3-Fluor, 3-Trifluormethyl oder 3-Carbomethoxy und $R^2$ für Wasserstoff stehen.

5. Verwendung gemäß Anspruch 4, dadurch gekennzeichnet , daß in der Formel $R^1$ für 3-Chlor oder 3-Carbomethoxy stehen.

6. 3-Iminoisoindolinverbindungen der Formel

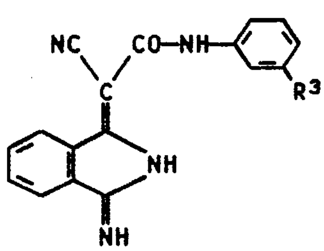

in der $R^3$ für Chlor oder Carbomethoxy steht.

7. Gemische von 3-Iminoisoindolinverbindungen der Formeln

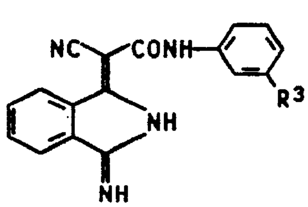

und

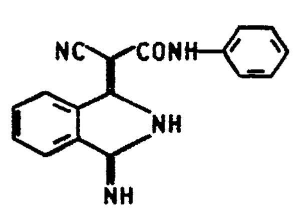

,

worin $R^3$ für Chlor oder Carbomethoxy steht.

nur GB

8. Lacke, pigmentiert mit Farbstoffen gemäß den Ansprüchen 1 bis 7.